# EUROPÄISCHE PATENTANMELDUNG

(11) **EP 0 666 440 A1**
(43) Veröffentlichungstag der Anmeldung: **09.08.1995**
(21) Anmeldenummer: 95810048.9
(22) Anmeldetag: 26.01.1995
(51) Int. Cl.: F16K 11/085, F24H 9/12

(54) **Drehschieberzufluss -und Rückflussventil für Radiatoren von Heizanlagen**

(30) Priorität: 02.02.1994 CH 301/94
(71) Anmelder: GIACOMINI Services and Engineering SA, CH-6512 Giubiasco (CH)
(72) Erfinder: Giacomini, Marco, I-28100 Novara (IT)
(74) Vertreter: Gaggini, Carlo

(57) **Zusammenfassung**

Das Drehschieberzufluss- und Rückflussventil für Radiatoren besitzt ein äusseres Gehäuse (16) in welchem ein mit Armen (24,24',24'') versehener Sternrotor (21) koaxial dreht. Das Ventil ist mit zwei Anschlussröhren für den Zufluss (19) bzw. den Rückfluss (20), die in zwei Punkten in die zylindrische Wand des Gehäuses (16) münden, einem mit dem Gehäuse (16) koaxialen und im Innern des Radiators (1) ausmündenden Innenrohr (11) versehen, mit dessen Rohr (11) das Ventil (2) an den Radiator (1) befestigt wird und um welches der Radiator (1) gekippt werden kann, sowie auch mit einer Verbindungsöffnung (27), die die Vorderwand des Gehäuses (16) mit dem Innern des Radiators (1) verbindet und welche ein Teil der Eingangsstrecke des Wassers in den Radiator (1) ausmacht.

## Beschreibung

Die vorliegende Erfindung betrifft ein Drehschieberventil für Radiatoren von Heizanlagen nach Oberbegriff des Anspruchs 1.

Die Anwendung von Zuflussventilen für Radiatoren ist in der Praxis verallgemeinert, wobei man sich dann, nach der am meisten betriebenen Technik, darauf limitiert, an den Radiator normalerweise an einem der unteren Ecken zwei fixe Anschlüsse anzubringen, der eine für den Flüssigkeitszufluss und der andere für den Rückfluss. Es sind zum Beispiel von der Praxis auch Radiatoren bekannt, in welchen das eingebaute Zufluss- und Rückflussventil bereits für zwei Funktionsarten des Radiators vorgesehen ist, das heisst den Einrohr- und Zweirohrbetrieb. Da diese dem Berufsmann bekannten Konzepte eine nicht zu unterschätzende Rolle im Bereich der vorliegenden Erfindung spielen, halten wir es für angebracht, hier eine deutlichere Erklärung zu geben.

Der Einrohrbetrieb des Radiators, bzw. der Heizanlage, ist jener, wo alle Radiatoren eines Warmwasserkreislaufes in Serie im Kreislauf eingesetzt sind, also besteht im eigentlichen Kreislauf nur ein Wasserzuflusstrang, an welchen alle Radiatoren angeschlossen sind und einen für den Rückfluss. Der Kreislauf besteht demnach aus einer einzigen Röhre. Um die Temperaturunterschiede zwischen den ersten und letzten Radiatoren eines solchen Kreislaufes zu vermeiden , muss natürlich an jedem Radiator die Warmwassermenge, die man durchfliessen lässt, in Funktion der Wassertemperatur dosiert sein, welche natürlich vom Anfang bis zum Ende der Zuflussverzweigung abnimmt, und auch in Abhängigkeit von anderen Parametern, wie die Oberfläche des Heizkörpers, des Wärmebedarfs des Raumes usw. Dazu ist jeder Radiator bzw. Zuflussventil mit einem Dosierungshahn versehen, durch welchen man die von der Zuflussleitung entnommene Wassermenge regulieren kann. Jeder Radiator wird somit im Innern des geschlossenen Wasserkreislaufes als by-pass behandelt, im Sinne, dass nur ein dosierter Teil des an seinem Zuflussventils gespiesenen warmen Wassers durch den Radiator durchgelassen wird.

Im Zweirohrsystem, das auch in der Praxis vielfach angewandt wird, sind die Radiatoren parallel im Heizkreislauf eingesetzt, das heisst, jeder Radiator besitzt seine eigene Zuflussleitung und seine eigene Rückflussleitung. Das ganze dem Radiator zugeführte Wasser fliesst durch ihn und hier hat es keinen Dosierungshahn am Radiator.

Beide Systeme, das Einrohr- wie das Zweirohrsystem, werden in der Praxis je nach den allgemeinen Bedingungen, die eine Heizanlage erfüllen soll, angewandt und die hier keine weiteren Erklärungen benötigen.

Zum Zwecke der vorliegenden Erfindung ist einzig die Tatsache wichtig, dass ein Radiator vorteilhaft eingesetzt werden können soll, wie dies bereits im Stand der Technik zum Beispiel mit den Radiatoren der deutschen Firma Schäfer geschieht, wo sowohl in Einrohr- wie auch in Zweirohrheizungskreisläufen diese mit dem kompakten Ventil, Top-Star NT40 bezeichnet, versehen sind. Zu diesem Zweck muss demnach das Zuflussventil zwei erste Eigenschaften besitzen, und zwar :
a) von einer Betriebsart auf die Andere umschaltbar zu sein
b) für den Einrohrbetrieb einen by-pass für die dosierte Regulierung des Wasserflusses durch den Radiator zu besitzen

Diese Eigenschaften sind im Stand der Technik in der allgemeinen Praxis angewandt. Von der parallelen Patentanmeldung des gleichen Anmelders, am gleichen Tag beim Bundesamt für geistiges Eigentum in Bern hinterlegt und welchem die Anmeldenummer 00300/94-3 gegeben wurde, ist ein neuer Heizkörpertyp mit eingebauten Armaturen bekannt, dessen Aufbau ideal ist, um das Zufluss- und Rückflussventil nach vorliegender Erfindung einzubauen.

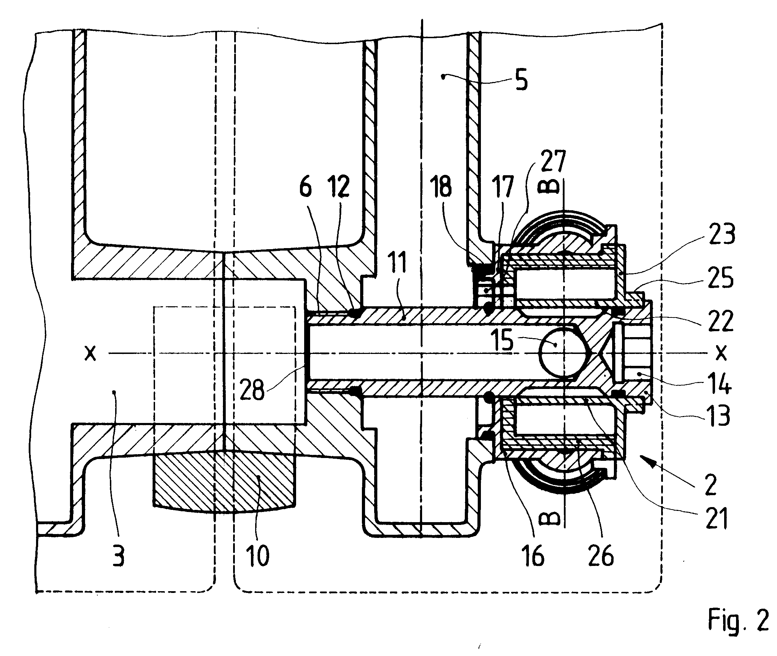

Wir verweisen deshalb auf das in der obenerwähnten, parallelen Patentanmeldung gesagte, deren Beschreibung als integrierender Bestandteil der vorliegenden Patentanmeldung betrachtet wird, was die allgemeine Herstellung eines für den Einbau des vorliegenden, erfinderischen Ventils idealen Heizkörpers betrifft, die im erwähnten Dokument mit Nummer 8 bezeichnet und in vereinfachter, schematischer Form in Fig. 2 dargestellt war. Das erwähnte Dokument dient demnach hauptsächlich für die allgemeine Beschreibung einer bevorzugten Anwendungsart des Ventils, Gegenstand der vorliegenden Erfindung, ohne Vollständigkeitsansprüche, das heisst, ohne die Möglichkeit auszuschliessen, das in vorliegender Erfindung betreffende Ventil an andere Radiatorentypen anzuwenden.

Nach der DE-A-2723258 ist weiter ein Mischer mit by-pass für Heizanlagen und im Besonderen für eingebaute Bodenheizungen bekannt, bestehend aus einem zylindrischen Gehäuse, in dessen Innern ein sternförmiger Rotor koaxial dreht, sodass er Radialarme aufweist, die mit der zylindrischen Innenwand des Gehäuses Verteilungskammern, die mit vier Anschlüssen für die Heizflüssigkeit in Verbindung gebracht werden können, abgrenzen.

In dieser Konstruktion befinden sich die vier Anschlüsse , alle in der gleichen, zur Drehachse des Ventilrotors senkrechten, Ebene, das heisst, sie münden alle in der zylindrischen Wand des äusseren Gehäuses aus.

Ein derartiges Drehschieberventil erlaubt wohl die Heizflüssigkeit in den verschiedenen Zuflussleitungen zu dosieren, bzw. zu mischen, kann aber nicht für die Lösung des Zweckes der vorliegenden Erfindung dienen, wie dies weiter unten genau angegeben wird, da es die Eigenschaften für einen geeigneten, vorteilhaften Einbau in einen Radiator nicht besitzt.

In der Tat ist der Zweck der vorliegenden Erfindung, ein Zufluss- und Rückflussdrehschieberventil vorzuschlagen, das dem in der DE-A-2723258 beschriebenen Typ entspricht, aber mit welchem man ausser der Flüssigkeitsdosierung und Umschaltbarkeit vom Einrohr- auf Zweirohrbetrieb, wie obenerwähnt, die folgenden, neuen Aufgaben verwirklichen kann:
a) der Radiator muss um seine horizontale Längsachse gekippt werden können, damit die hinter ihm sich befindende Wand zu Reinigungszwecken usw. zugänglich gemacht wird, ohne ihn vom Heizflüssigkeitskreislauf abtrennen zu müssen. Normalerweise wird die Umkippachse einer unteren Längsachse des Heizkörpers entsprechen, um welche der Radiator durch zweckmässige, halbkreisförmige Verankerungsbeine usw. zum Umdrehen abgestützt wird.
b) der Radiator muss vom Heizungskreislauf abgetrennt werden können, ohne dass dieser entleert werden muss und sogar ohne den Betrieb der eigentlichen Anlage zu unterbrechen.

Diese und andere Zwecke, die später genau angegeben werden, können mit einem Zufluss- und Rückflussventil für Heizkörper, das den Charakteristiken des Anspruches 1 entspricht, erzielt werden.

In der Tat erlaubt die spezifische Anordnung der Anschlussröhren, im Besonderen jene der dritten Röhre, bestehend aus einer mit dem Ventilgehäuse koaxialen Röhren, die einzelnen Ventilkammern so anzuordnen, damit obige Zwecke erzielt werden, wie dies aus der detaillierten Erklärung eines Verwirklichungsbeispiel hervorgehen wird.

Weiter bevorzügliche Eigenschaften des erfinderischen Ventils sind dann Gegenstand der Nebenansprüche und werden im Verlaufe der nachfolgenden Beschreibung erläutert.

Die Erfindung wird nun mit Hilfe einer Verwirklichungsform und der entsprechenden Zeichnungen detaillierter beschrieben.

Die Figuren zeigen :
- Fig. 1: Eine schematische Schnittansicht eines Heizkörpers mit den nötigen Ventilen eingebaut und im Besonderen das erfinderische Zufluss- und Rückflussventil.
- Fig. 2: Eine Schnittansicht des erfinderischen Zuflussventils, im Heizkörper der Fig. 1 der Linie A-A der Fig. 3 entlang im Schnitt, eingesetzt, das heisst, mit dem Ventil in Position für den Einrohrbetrieb und dem Radiator "ausgeschlossen" von der Heizanlage.
- Fig. 3: Eine Schnittansicht des erfinderischen Ventils der Linie B-B der Fig. 2 entlang und mit dem Ventil in Position wie in Fig. 2 erwähnt.
- Fig. 4: Eine Schnittansicht des Ventils der Linie B-B der Fig. 2 entlang, aber mit dem Ventilrotor in Position für den Zweirohrbetrieb des Ventils gedreht.
- Fig. 5: Die Schnittansicht des Ventils immer noch der Linie B-B der Fig. 2 entlang, aber mit dem Rotor auf Zwischenstellung gedreht, die einem Zweirohrbetrieb des Ventils entspricht, aber mit dem Radiator an der Heizanlage angeschlossen.
- Figg. 6,7 und 8: Zeigen das erfinderische Zuflussventil von der Aussenseite in den drei den Figg. 3,4 und 5 entsprechenden Positionen, um die Regulierungsart des Ventils von Aussen zu zeigen.

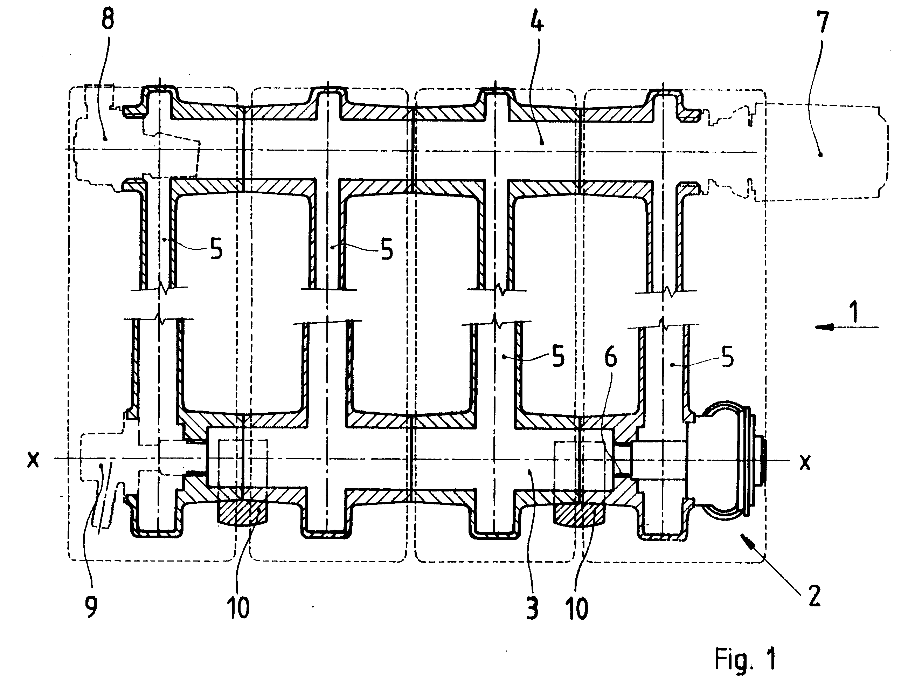

Die Fig. 1 zeigt schematisch im Schnitt einen Radiator 1, in welchem das erfinderische Zufluss- und Rückflussventil 2 eingesetzt ist.

Der hier gezeigte Radiator 1 entspricht in Details jenem in der parallelen Patentanmeldung des Anmelders beschriebenen, in der Einführung erwähnten und auf welche hier Bezug genommen wird, welcher kurz "parallele Anmeldung" genannt wird. Es handelt sich nämlich um einen Radiator bestehend aus einer Mehrzahl von Alluminiumelementen, die in den oberen und unteren Kontaktpunkten verschweisst sind, sodass ein unterer Durchgangskanal 3 und ein oberer Durchgangskanal 4 entsteht, die untereinander durch vertikale Verbindungsröhren 5 verbunden sind. Das Zuflussventil 2 ist nun durch ein Gewinde 6 an der rechten Vorderseite des unteren Kanals 3 angeschraubt, wie dies detaillierter aus Fig. 2 ersichtlich ist. In der Fig. 1 sind dann durch gestrichelte Linien die anderen, notwendigen Elemente für den Radiatorbetrieb 1 gezeigt, wie das Regulierventil 7, das Abblaseventil 8 und das Abflussventil 9. Der hier gezeigt, aus druckgegossenen und unter sich geschweissten Alluminiumelementen gefertigte Radiator wird einzig als Beispiel gezeigt, da er nur eine der vielen Verwirklichungsmöglichkeiten eines zu den Zwecken der vorliegenden Erfindung geeigneten Radiators darstellt. Im Besonderen ist es ohne weiteres möglich, Radiatoren in zweckmässig bearbeitetem Stahlblech herzustellen, die somit für das Ventil der vorliegenden Erfindung aufnahmefähig sind und deren Vorteile erzielen können. Die einzige verlangte Bedingung ist, dass das Ventil 2 durch eine Gewindeschraube 6 angeschraubt werden kann und dass die Achse dieser Gewindeschraube mit der Umkippungsachse x-x übereinstimmen muss, um welche der Radiator 1 zur Wegschwenkung von der Mauer gekippt werden können soll, wie dies jetzt erklärt wird.

Wie man auch noch in der Fig. 1 sieht, weist der Radiator 1 einen unteren Kanal 3 von kreisförmigem Querschnitt auf. Dieser wird an den Wänden durch zwei schalenförmige Halter 10 (in den Figuren 1 und 2 in Schnittansicht unterscheidbar) gestützt, die die äussere Einfassung des Kanals 3 in den Stützpunkten vereinigen. Oberhalb ist der Radiator 1 nur in irgendeiner Art (nicht dargestellt) an die Wand angehakt, damit er nicht nach vorne fällt. Da das Halterpaar 10 mit der Achse x-x des unteren Kanals 3 koaxial und letzterer koaxial mit der Drehachse des Ventilrotors ist, kann der Radiator 1 dann, nach vorheriger Befreiung vom oberen Blockierungshaken (nicht gezeigt) um die Achse x-x gekippt werden. Da das Zuflussventil 2 eine solche Umdrehung erlaubt- wie nachfolgend besser erklärt wird- ohne dass es notwendig ist, die Warmwasserzuflussanschlüsse zum Heizkörper 1 abzutrennen, ist es demnach möglich, den Radiator nach unten zu kippen, zum Beispiel, um die hintere Wand zu reinigen oder anzustreichen, ohne den Radiator 1 vom Heizungskreislauf abtrennen oder entleeren zu müssen. Somit ist die obenerwähnte Aufgabe a) verwirklicht.

Wie dies möglich ist und wie man auch die Aufgabe b) der Erfindung verwirklichen kann, wird nun mit Hilfe der Figuren 2,3,4 und 5, die den Aufbau des erfinderischen Ventils in seinen verschiedenen Betriebspositionen zeigen, detaillierter beschrieben.

Das Ventil weist also ein Innenrohr 11 auf, das durch das Gewinde 6 im unteren Durchgangskanal 3, koaxial mit demselben, in solcher Art angeschraubt wird, dass die untere Kammer des zweiten Elementes des unteren Kanals 3 direkt mit dem Innern der Röhre 11 selbst verbunden ist. Man vergleiche in dieser Hinsicht die Beschreibung der parallelen Anmeldung, wo diese Elemente im Detail beschrieben sind. Dank dieser Befestigungsart des Ventils 2, wird die in den Radiator 1 einfliessende Flüssigkeit, wie weiter unten erklärt wird, zuerst ganz durch das Verbindungsrohr 5 strömen, um das Regulierventil 7 zu erreichen und, nach gemachter Regulierung, den Radiator 1 durchfliessen, um dann durch die mit Gewinde 6 versehene Rohröffnung 11, in der Art, wie wir es erklären werden, auszufliessen. Mit 12 wird ein Dichtungsring angegeben, normalerweise aus einem Gummiring in kreisförmigem Querschnitt bestehend, der für die Dichtigkeitsbildung lokal verformt wird. Solche Ringe verhindern die gegenseitige Umdrehung der Gegenstände nicht, obschon auch während der Umdrehung die Dichtigkeit gewährleistet wird.

Das Rohr 11 ist von der Aussenseite vorne geschlossen und weist einen Kragen 13 auf, dessen Zweck später erklärt wird, sowie einen inneren Sechseckhohlraum 14, in welchen ein Sechskantschlüssel zum Anschrauben der Röhre 11 an den Radiator eingesteckt werden kann. Im Rohr 11 ist ausserdem wenigstens ein Verbindungsloch 15 zur Verbindung des Innern der Röhre 11 mit den anderen Ventilkammern, auf eine Art und zum Zweck, die wir weiter unten beschreiben werden, vorhanden. Das Gehäuse 16 des Ventils 2 wird auf das Innenrohr 11 gesteckt. Das Gehäuse 16 ist als ein zylindrischer Körper mit einer Vorderwand 17 gefertigt, die nach der Montage- durch einen in der Kragenrille, womit die Wand 17 versehen ist, angeordneten Dichtungsring 18 zweckmässig dicht gehalten- die kreisförmige Oeffnung des unteren Durchgangkanals 3 des Radiators schliessen soll. Die andere Vorderseite des zylindrischen Gehäuse Gehäuse 16 ist offen und empfängt die anderen Teile des Ventils 2.

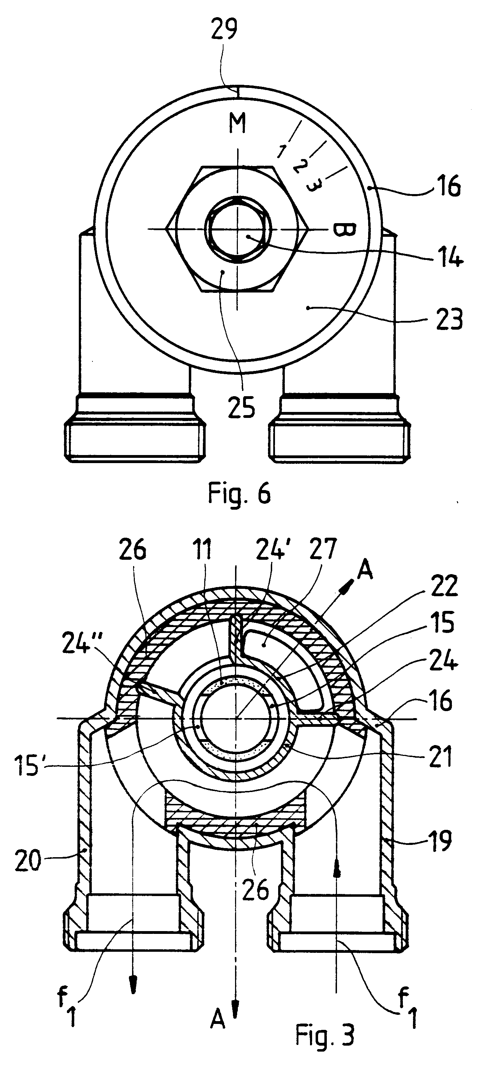

Die zylindrische Wand des Gehäuses 16 weist nun erfinderisch zwei rohrförmige Anschlüsse 19 und 20 auf, die an ihren offenen Enden mit den notwendigen Gewinden für den Anschluss an die Leitungen versehen sind. Der Anschluss 19 rechts in der Fig. 3 wird als Zuflussanschluss bezeichnet, jener links 20 als Rückflussanschluss. Dies bedeutet, dass in der besonderen Form des erfinderischen Ventils 2, als nicht erschöpfendes Verwirklichungsbeispiel der Erfindung gezeigt, der Anschluss 19 als Warmwasserzuführung an das Ventil 2 und demnach an den Radiator 1 dient, währenddem jener 20, dazu dient, das Wasser nach Durchgang im Radiator 1 oder wenigsten durch das Ventil zum Anlagekreislauf, zurückzufordern.

Auf dem Rohr 11 ist auch ein sternförmiger Rotor 21 eingefügt, welcher eine zylindrische Buchse 22 einschliesst, die so eingefügt ist, dass sie auf dem Rohr 11 drehen kann und auf der einen Seite durch einen breiten Flansch, der den Schliessdeckel 23 des Ventils 2 bildet, abgeschlossen ist. Auf der äusseren Oberfläche der Buchse 22 sind drei Rotorarme 24, 24' und 24'' angeordnet, die bis zum Anschluss an die Innenwand des Deckels 23 gelangen und mit der zylindrischen Wand des Gehäuses 16 drei Kammern oder Drehschieberverteiler abgrenzen, wie dies später besser erklärt wird. Der Sternrotor 21 weist schliesslich an seinem äusseren Ventilende 2 einen Teil 25 in sechseckförmigem Querschnitt auf, das heisst eine Mutter, durch welche der Sternrotor 21 mit einem geeigneten Schlüssel zweckmässig gegenüber dem Gehäuse 16 des Ventils 2 gedreht werden kann, damit in dessem Innern die nützlichen Verbindungen für die Flüssigkeit geschaffen werden. Das Gehäuse 16, nach einer ersten bevorzugten Verwirklichungsform der Erfindung, in den Figuren von 2 bis 5 dargestellt, ist so gefertigt, dass seine zylindrische Innenwand und jene vom Rohr geschlossene innere Stirnwand (oder die Wand links in Fig.2) mit einem elastischen, verformbaren Ueberzug 26 versehen sind. Auf diesem Ueberzug gleiten die Arme 24,24'' und 24'' sodass zwischen den genannten Wänden und den Armen 24,24' und 24'' eine heizflüssigkeitsdichte Verbindung erzielt wird. In anderen Worten gesagt "dringen" die Arme 24,24'und 24'' des Sternrotors 21 leicht in den elastischen, verformbaren Ueberzug 26 hinein, verformen diesen lokal und bewirken somit den Dichtungseffekt.

Die hier gezeigte Ausführungsform mit elastischem Ueberzug 26 (normalerweise aus Gummi in geeignetem und nach Versuchen gewählten Gummi) ist nicht die einzige mögliche Lösung. In der Tat kann nach einer anderen Lösungsform, auch im Bereich der vorliegenden Erfindung inbegriffen und auch nicht gezeigt), der zur Dichtigkeitsbildung notwendige elastische Teil zwischem dem Sternrotor 21 und dem Gehäuse 16 verwirklicht werden, indem ein formfestes Gehäuse 16 ohne verformbaren Ueberzug 26 angewandt wird, wo aber die Arme 24, 24'und 24'' und andere passende Teile des Sternrotors 21 in den Zonen, wo diese mit dem Gehäuse 16 in Kontakt treten, eine genügende Elastizität aufweisen, zum Beispiel , indem diese Zonen mit einem elastischen Ueberzug überzogen werden (nicht gezeigt), damit durch seine elastische Verformung der verlangte Dichtungseffekt zwischen den Kammern für den Ventilbetrieb 2 gewährleistet wird.

In einer Zone der Vorderwand des Gehäuses 16, jene rechts oben in unserem Verwirklichungsbeispiel, gibt es dann eine Fensteröffnung 27, die auch durch den Ueberzug 26 geht und somit das Innere des Sternrotors 21 mit dem Innern des Radiators 1 in Verbindung bringt, und genauer, mit seinem vertikalen Verbindungsrohr 5. Die Winkelausdehnung der Oeffnung 27 sowie seine Position werden gegenüber der Winkelposition der Arme 24, 24'und 24'' auf dem Rotor 21 zweckmässig gewählt, wie man weiter unten besser sehen wird, wenn wir den Ventilbetrieb 1 in seinen verschiedenen möglichen Positionen detailliert beschreiben werden.

Das Ventil 2 selbst ist mit einigen anderen Dichtungspunkten versehen, in der Figur durch die entsprechenden Dichtungsringe gezeigt und wir vermeiden es, diese hier zu beschreiben, da ihre Funktion jedem Berufsman klar sind.

Das Erfinderische Ventil 2 schliesst also vier Anschlüsse für die Flüssigkeit ein, und zwar wie folgt :
- die zwei Anschlüsse 19 und 20, Zufluss- und Rückflussanschlüsse genannt, die das Ventil 2 fest an die Zuführungs- und Abflussröhren der Heizkreislaufflüssigkeit (nicht gezeigt) verbinden.
- der Anschluss 28 des Innenrohres 11, der das Innere des Radiators 1 mit dem Ventil 2 verbindet und einen Teil des Flüssigkeitsrückflussganges durch den Radiator 1 bildet.
- der Anschluss 27 ist durch die Oeffnung, die das Ventil 2 mit dem Radiator 1 verbindet, gebildet und macht einen Teil des Flüssigkeitszuflussganges durch den Radiator 1 aus.

Nach einer bevorzugten Verwirklichungsform der Erfindung ist das Gehäuse ein durch Druckgiessen erzielter Körper oder durch ein formgestanztes Metall, wie Messing oder Alluminium, oder Hartplastik. Diese Lösung erlaubt die Herstellung des Gehäuses mit grosser Präzision und zu niedrigem Preis, auch dank der Tatsache, dass nachfolgende Bearbeitungsgänge auf ein Minimum beschränkt werden.

Nach einer weiteren bevorzugten Verwirklichungsform der Erfindung ist der Sternrotor 21 ein formfester Körper, durch Druckgiessen oder Formstanzen von einem Metall, wie Messing oder Alluminium, oder Hartplastik erzielt. Auch diese bevorzugte Sonderform bietet Vorteile von hauptsächlich wirtschaftlicher Natur, da es sich um Technologien handelt, mit denen eine grosse Anzahl von kompliziert geformten Körper rationell hergestellt werden können. Natürlich ist es im Falle, wo sowohl das Gehäuse 16 wie auch der Rotor 21 aus formfesten Material ausgewählt werden, notwendig, zwischen diesen über den beschriebenen Ueberzug 26 zu verfügen, damit die Dichtigkeit zwischen dem Gehäuse 16 und dem Rotor 21 gesichert ist.

Das Ventil 2 ist normalerweise durch das Innenrohr 11 an den Radiator befestigt, welches durch ein Gewinde 6 im Radiator angeschraubt ist.

Auf einer derartigen Röhre kann das Ventil 2 drehen. Es wird jedoch durch die mit den Zufluss- und Rückflussanschlüssen 19 und 20 verbundenen Anschlussröhren (nicht gezeigt) in Position gehalten: man kann also auch behaupten, dass die Anschlussröhren selbst das Ventil 2 fest und positioniert halten und dass der Radiator 1 auf dem Ventil selbst hängt, um welches (bzw. um dessen Achse x-x) er drehen kann. In der Praxis zieht man vor, Stützhalter 10 für den Radiator 1 auf seinen beiden Seiten vorzusehen, das heisst, auch auf jener, wo das von seinen Anschlussröhren gestützte Ventil 2 ist, aus Gründen der Montageeinfachheit und Handhabung des Radiators 1, wie dies klarer im Verlauf der nachfolgenden Betriebsartbeschreibung hervorgehen wird.

Die Tatsache, dass es sich um eine "unbestimmte" Befestigungsart handelt, soll nicht stören, da die Anschlussröhren immer eine gewisse Elastizität aufweisen, die ihren Anschluss erlaubt, auch wenn das Ventil 2 bereits mehr oder weniger in definitiver Position von dem auf seinen Halter 10 befestigten Radiator 1 gehalten wird.

Die Figuren 6,7 und 8 zeigen das Ventil in einer Ansicht von aussen und von vorne, das heisst von rechts nach links in der Sektion der Fig. 2, wie es dem Auge des Beobachters erscheint. Man unterscheidet also das Gehäuse 16, den inneren Sechskanthohlraum 14, durch den die Röhre 11 mittels dem Gewinde 6 an den Radiator angeschraubt werden kann und das äussere Sechseckteil 25 (Mutter), durch welches der Sternrotor 21 gegenüber dem Gehäuse 16 gedreht werden kann. Auf dem Deckel 23 des Sternrotors 21 sind Symbole eingraviert, die folgende Bedeutung haben:

M = Einrohrbetrieb geschlossen: in dieser Position ist das Ventil 2 gechlossen, das heisst, die Heizflüssigkeit fliesst in das Ventil des Zuflussanschlusses 19 ein und fliesst direkt durch den Rückflussanschluss 20 aus, ohne überhaupt durch den Radiator zu gehen. Diese in den Figuren 3 und 6 gezeigte Position entspricht dem Fall, wo der Radiator vom ganzen Kreislauf abgetrennt ist, also bei kaltem Radiator (oder ohne Wasser, wie wir sehen werden).

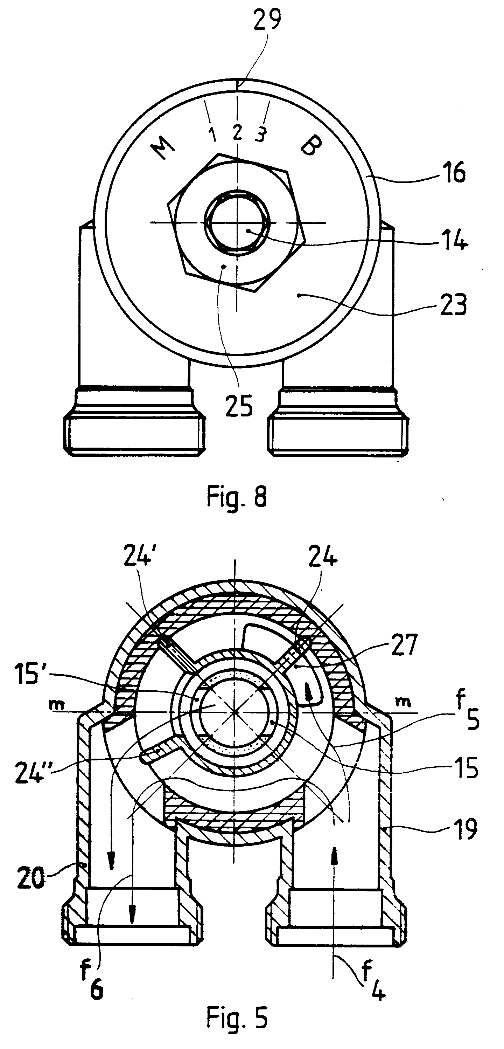

1,2,3 = diese Positionen bedeuten, dass der Radiator in einröhrigem Betrieb mit Flüssigkeitsdurchgang im Radiator auf Zwischenstellung ist. Das bedeutet, dass ein Teil der durch den Zuflussanschluss 19 zugeführten Flüssigkeit durch den Radiator 1 geht und ihn erwärmt, währenddem der andere Teil, je nach Position des Sternrotors 21 (auf den Positionen 1,2,3 und auf allen Zwischenstellungen) direkt, ohne durch den Radiator 1 zu gehen, ausfliesst und nachdem er sich mit der durch den Radiator 1 gegangenen Menge gemischt hat, durch den Rückflussanschluss 20 geht und an den nachfolgenden Radiator der Anlage geströmt wird. 1,2,3 sind demnach Kennziffern , um die Zwischenstellung zwischen der Betriebsposition M und B anzuzeigen. Der Betrieb in dieser Zwischenstellung (als regulierter oder mit Radiator angeschlossenem Einrohrbetrieb bestimmbar) ist in den Figuren 5 und 8 dargestellt, wo das Ventil aus einer Zwischenstellung mit 2 bezeichnet steht.

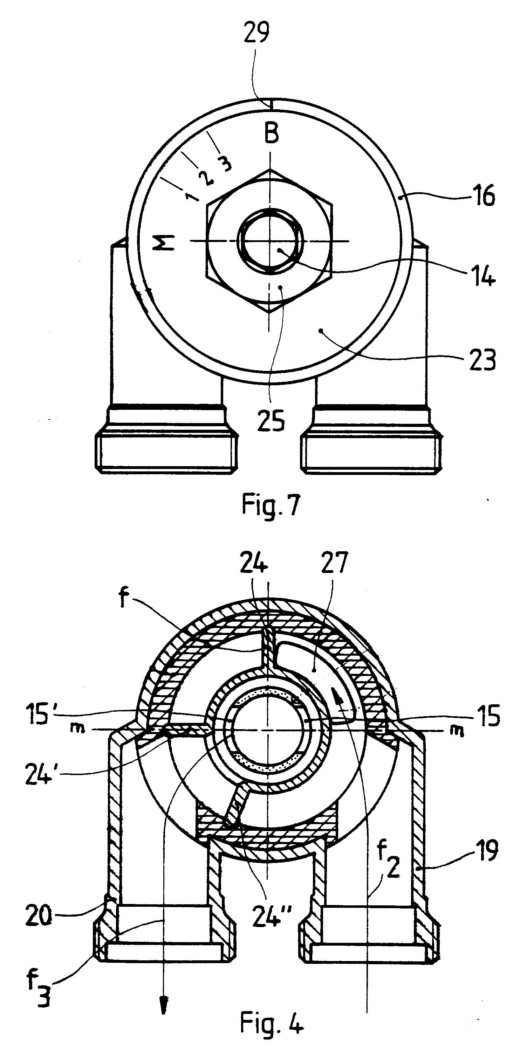

B = Zweirohrbetrieb. In dieser den Figuren 4 und 7 entsprechenden Position geht die ganze vom Zuflussanschluss 19 einströmende Flüssigkeit durch den Radiator 1 und strömt beim Rückflussanschluss 20 aus, um zum Heizkessel oder zum Zentralverteiler zurückzukehren.

In dieser Position hat das Ventil 2 keinerlei Reguliereffekt auf die den Radiator 1 durchgehende Flüssigkeitsmenge.

Wenn nun die Sechskantmutter 25 gedreht wird, kann sich der Sternrotor 21 im Innern des Gehäuses 16 drehen und so eine der beiden äussersten vorhererwähnten Positionen M und B einnehmen, sowie alle Zwischenstellungen zwischen M und B (unter welchen die Bezugspositionen 1,2,3). Zu diesem Zweck genügt es, die entsprechende Markierung auf dem Deckel 12 in Uebereinstimmung mit der zweckmässigen Markierung 29 auf dem Gehäuse 16 anzuordnen.

Die drei obengenannten Grundpositionen näher betrachtend, kann man folgendes sehen: Position M (Figuren 3 und 6) Einrohr geschlossen.

Der Sternrotor 21 befindet sich in einer solchen Position, dass sein Arm 24 der Flüssigkeit komplett den Zugang zur Oeffnung 27 schliesst.

Die Flüssigkeit durchströmt demnach den Kanal, der in diesem Fall den Zuflussanschluss 19, zwischem dem Ueberzug 26 und der Buchse 22 des Sternrotors 21, direkt mit jenem des Rückflusses 20 verbindet, der Strecke folgend, die in Fig. 3 mit Pfeil f₁ angegeben ist. Die Flüssigkeit strömt also direkt vom Ventil 2 aus, ohne in den Radiator 1 zu treten und daher, ohne ihn zu erwärmen. In dieser Ventilposition ist es also auch möglich, das Innenrohr 11 des Radiatorventils 1 abzutrennen, das heisst, von seinem Gewinde 6 wegzuschrauben, ohne die Anschlussröhren der Anschlüsse 19 und 20 abtrennen zu müssen: es wird genügen, das Ventil frei im Raum festzuhalten und dem Radiator 2 durch die Rohrabschraubung 11 zu erlauben, nach links verschoben zu werden (in Fig. 2), (der natürlich zuerst durch das Abflussventil 9 von der enthaltenden Flüssigkeit entleert wird), bis zur kompletten Abschraubung. Der Radiator kann vom Kreislauf entfernt, bzw. angeschlossen werden, währenddem die Flüssigkeit weiter normal durch das Ventil 2 strömt. Dies erlaubt zum Beispiel einzelnen Radiatoren 1 bei angeschlossener Heizung zu ersetzen oder auch einen ganzen Heizkreislauf zu montieren und dessen Dichtigkeit zu prüfen, bevor die Heizkörper angebracht werden: es genügt, wenn alle an die entsprechenden Anschlussröhren befestigte Ventile auf Position M angeordnet sind.

Position B (Figg. von 4 bis 7)

In dieser Position (Zweirohrbetrieb) befindet sich der Arm 24 des Sternrotors 21 jenseits der Oeffnung 27, währenddem der Arm 24'' den direkten Anschlusskanal zwischen dem Anschluss und jenem 20 komplett schliesst. Die ganze vom Zuflussanschluss 19 einströmende Flüssigkeit muss demnach durch die Oeffnung 27 gehen, und danach gelangt sie in die Kanalkammer 5 des Radiators 1 (siehe auch Fig. 2), durchströmt den ganzen Radiator und fliesst durch den unteren, horizontalen Kanal 3 an das Ventil 2 zurück und gelangt zum Anschluss 28 des Innenrohres 11. Von diesem Rohr 11 strömt die Flüssigkeit durch das Verbindungsloch 15 (in den Figuren 3,4 und 5 sind zwei solche Löcher, bezeichnet mit 15 und 15' vorgesehen worden: ein einziges genügt, aber zwei sind einfacher herzustellen), bis zum "offenen" Schieber (da die Buchse zwischen den Armen 24' und 24'' ohne Wand ist) zwischen den Armen 24' und 24'', wo sich der Schieber in dieser Position direkt mit dem Rückflussanschluss 20 in Verbindung befindet. Die Flüssigkeit folgt demnach der Strecke des Pfeils f₂ , um in die Oefnnung 27 zu treten und jener des Pfeils f₃ , um vom Ventil 2 auszuströmen.

Zwischenstellung 1,2,3 (Figg. 5 und 8), "regulierter" Einrohrbetrieb Der Sternrotor 21 ist hier so angeordnet, dass sich der Arm 24 in einer Zwischenstellung gegenüber der Oeffnung 27 befindet, das heisst, eine Stellung, die dem Durchgang der vom Anschluss 19 nach Pfeil f₄ kommenden Flüssigkeit nur einen Teil der Oeffnung 27 aufmacht. Auch auf der Seite des Armes 24 '' befindet sich dieser in einer solchen Stellung, wo nur ein Teil des direkten Durchgangs zwischen dem Anschluss 19 und Anschluss 20 frei gelassen wird. Die in das Anschlussventil 19 einströmende Flüssigkeit folgt demnach teilweise der Strecke des Pfeils f₅ zur Oeffnung 27 hin, auf dessen Strecke sie den Radiator 1 nach der in den Figuren 4 und 7 gezeigten Strecke folgt, und teilweise wird sie direkt gegen den Rückflussanschluss 20, der mit Pfeil f₆ angegebenen Strecke folgend, der gleichen in den Figg. 3 und 6 gezeigten Strecke, strömen.

Die Winkelstellung der Arme 24, 24', 24'' des Sternrotors 21, jene der Fensteröffnung 27 auf der inneren Vorderseite des Gehäuses 16 und jene der beiden in die zylindrische Wand des Gehäuses 16 mündenden Anschlüssen 19 und 20 sind klarerweise unter sich durch ein genaues Funktionsverhältnis verbunden.

Die bevorzugte, hier gezeigte Verwirklichungsform, die ein Ventil 2 mit vom Gehäuse in zwei auf 45 Grad gegenüber einer Mittelebene angeordneten Winkelstellungen heraustretenden Anschlüssen 19 und 20 zeigen, (in Fig. 5 mit m-m bezeichnet) und mit ebenfalls auf 45 Grad gebogenen Anschlussröhren, sodass sie untereinander parallel sind, ist natürlich nur eine der vielen anderen Verwirklichungsmöglichkeiten eines derartigen Ventils.

Wichtig zu den erfinderischen Zwecken ist allein die allgemeine Anordnung der Anschlüsse , wie in Anspruch 1 vorgesehen, während, was die Winkelposition der Arme 24, 24', 24'' des Sternrotors 21 und der Anschlussöffnungen 19,20 und 27 betrifft, die grösste Auswahlfreiheit gegeben ist: es genügt, wenn die Arme 24, 24', 24'' zwischen den genannten Oeffnungen die vorgesehenen Verbindungen, wie Positionen B,M und Zwischenstellungen von 1 bis 3 schaffen können. Die Vorteile des erfinderischen Ventils sind im Verlauf der vorliegenden Beschreibung in einer bevorzugten Lösung erläutert worden und teilweise auch in der Beschreibung der obenerwähnten, parallelen Anmeldung, dessen Inhalt als integrierender Bestandteil der vorliegenden Erfindung betrachtet wird.

Als zusätzliche Vorteile wollen wir hier auch die relativ geringen Ausmasse des Ventils erwähnen, die eine perfekte Integration desselben im Radiator innerhalb dessen Einfassung erlauben, sowie die relativ günstigen Herstellungskosten, da der grösste Teil der Bearbeitungsgänge das Drehen von symmetrischen Teilen ausmacht.

### LISTE

- 1.: Radiator
- 2.: Ventil
- 3.: unterer Durchgangskanal
- 4.: oberer Durchgangskanal
- 5.: Verbindungsrohr
- 6: Gewinde
- 7.: Regulierventil
- 8.: Abblaseventil
- 9.: Abflussventil
- 10.: Halter
- 11.: Innenrohr
- 12.: Dichtungsring
- 13.: Kragen
- 14.: innerer Sechskanthohlraum
- 15.: Verbindungsloch
- 16.: Gehäuse
- 17.: Vorderwand
- 18.: Dichtungsring
- 19.: Zuflussanschluss
- 20.: Rückflussanschluss
- 21.: Sternrotor
- 22.: zylindrische Buchse
- 23.: Deckel ( Rotorflansch)
- 24,24',24'': Rotorarme
- 25.: Teil in sechseckförmigem Querschnitt (Mutter)
- 26.: Ueberzug
- 27.: Fensteröffnung
- 28.: Anschluss
- 29.: Markierung

## Patentansprüche

1. Drehschieberzufluss- und Rückflussventil für Radiatoren von Heizanlagen, mit äusserem , zylindrischen Gehäuse (16), in dessen Innern ein Sternrotor (21) mit Radialarmen (24,24',24'') koaxial dreht und mit der zylindrischen Innenwand des Gehäuses (16) Verteilungskammern bildet, die mit vier Anschlussen (19,20,27, 28) für die Heizflüssigkeiten in Verbindung gebracht werden können,
dadurch gekennzeichnet, dass
zwei (19,20) der vier Anschlüsse (19,20,27,28) in die zylindrische Wand des äusseren Gehäuses (16) münden, ein dritter Anschluss (28) aus einer mit dem Gehäuse (16) koaxialen Röhre (11) gebildet wird, die mit einem (20) der zwei erwähnten Anschlüsse (19,20) durch wenigstens ein Flüssigkeitsdurchgangsloch (15) verbunden ist, wobei auch die Röhre (11) gegenüber dem äusseren Gehäuse (16) drehen kann, und dass der vierte Anschluss (27) als Loch in der inneren Vorderwand des äusseren Gehäuses (16) ausmündet und diesem mit dem Radiator (1) verbindet.

2. Ventil nach Anspruch 1,
dadurch gekennzeichnet, dass
das Gehäuse (16) aus einem formfesten, tassenförmigen, auf einer Vorderseite durch einen Deckel (23) geschlossenen Körper besteht, durch dessen andere Vorderseite ein Rohr durchgeht (11) und dessen zylindrische Innenwand und jene vom Rohr (11) geschlossene, innere Stirnwand mit einem elastisch verformbaren Ueberzug (26) versehen sind, auf welchem die Arme (24,24',24'') des Sternrotors (21) gleiten, sodass zwischen genannten Wänden und Armen (24,24',24'') eine heizflüssigkeitsdichte Verbindung gebildet wird.

3. Ventil nach Anspruch 1,
dadurch gekennzeichnet, dass
das Gehäuse (16) ein durch Druckgiessen oder Metallformstanzung, wie Messing oder Alluminium, oder Hartplastik hergestellter Körper ist.

4. Ventil nach Anspruch 1,
dadurch gekennzeichnet, dass
der Sternrotor (21) ein durch Druckgiessen oder Metallformstanzung, wie Messing oder Alluminium, oder Hartplastik hergestellter Körper ist.

5. Ventil nach Anspruch 1 oder 2,
dadurch gekennzeichnet, dass
das Gehäuse (16) aus einem formfesten Körper besteht, währenddem der Sternrotor (21), in seinen mit den Innenwänden des Gehäuses (16) in Kontakt tretenden Zonen, aus einem elastisch verformbaren Material besteht, das im Kontaktpunkt mit dem Gehäuse (16) eine Heizflüssigkeitsdichtung bildet.

6. Ventil nach Anspruch 1,
dadurch gekennzeichnet, dass
der Sternrotor (21) drei Radialarme (24,24',24'') aufweist, die so auf dem Umfang verteilt sind, dass, unter Berücksichtigung der Position der beiden Anschlüsse (19,20), die in einer spezifischen Position des Sternrotos (21) in die zylindrische Wand des Gehäuses (16) münden, die beiden genannten Anschlüsse (19,20) unter sich direkt verbunden sind, sodass die ganze Flüssigkeit direkt von einem in den anderen strömt, währenddem in einer anderen spezifischen Stellung des Sternrotors (21) einer (20) der Anschlüsse (19,20), die in die zylindrische Wand des Gehäuses (16) münden, direkt mit dem Innern (28) der koaxialen Röhre (11) verbunden ist, während der andere Anschluss (19), der in die zylindrische Wand des Gehäuses (16) mündet, direkt mit dem vierten Anschluss (28) verbunden ist.

7. Einsatz des Drehschieberventils für Radiatoren von Heizanlagen nach Anspruch 1,
dadurch gekennzeichnet, dass
das Ventil (2) als Zufluss- und Rückflussventil der Heizflüssigkeit des Radiators (1) so montiert ist, dass die Drehachse (x-x) des Sternrotors (21) koaxial mit der Drehungsachse (x-x) des Radiators (1) ist, um welches der Radiator (1) für den Zugang zu der sonst normalerweise vom Radiator (1) versteckten Wand umgekippt werden kann.

8. Einsatz des Ventils nach Anspruch 7,
dadurch gekennzeichnet, dass
das Ventil (2) durch ein am Ende der koaxialen Röhre (11) angebrachten Gewinde (6) an den Radiator (1) befestigt ist, sodass der Radiator (1) mittels Ausziehung aus der koaxialen Röhre (11) nach vorheriger Abschraubung der Röhre selbst (11) selbst vom Ventil (2) abgetrennt werden kann, ohne dass es nötig ist, das Ventil (2) von den Zufluss- und Rückflussröhren, mit welchen es verbunden ist, abzutrennen.
